# EUROPEAN PATENT SPECIFICATION

(11) **EP 1 326 198 B1**
(45) Date of publication and mention of the grant of the patent: **26.02.2014**
(21) Application number: 02028810.6
(22) Date of filing: 23.12.2002
(51) Int. Cl.: G06K 15/12

(54) **Illumination detection method and apparatus for led printbars**
Verfahren und Vorrichtung zur Beleuchtungserkennung zur Verwendung bei LED-Druckbalken
Procédé et dispositif de détection d'illumination pour des barres d'impression à diodes électroluminescentes

(30) Priority: 26.12.2001 US 25484
(43) Date of publication of application: 09.07.2003
(73) Proprietor: Xerox Corporation, Rochester, New York 14644 (US)
(72) Inventor: Maeda, Patrick, Y., Mountain View, California 94040 (US)
(74) Representative: Grünecker, Kinkeldey, Stockmair & Schwanhäusser

(56) References cited:
- EP-A- 0 310 266
- US-A- 4 588 883

## Description

### Background

Printbars are used in printer systems to identify regions on a paper in which a marking material, such as a toner, is to be deposited. Modem printers often use an array of LEDs on a printbar to mark areas on which to deposit the toner. Each area identified by an LED corresponds to a "pixel" of deposited toner. For an ideal printed image, these pixels should be of uniform in size.

In order to ensure uniformity of the pixels on a printed material, it is important that each LED on a printbar outputs an intensity that is similar to other LEDs on the printbar. During assembly, the LED printbars are corrected for non-uniformities between different LEDs in the printbar. However, almost immediately after being set in the factor, each LED in the printbar starts aging at a different rate. The different rates of aging and other changes to the LEDs and the drive systems results in a slow deterioration of printer output as non-uniformities increases in time causing more uneven print results. When non-uniformities reach an unacceptable level, service personnel are typically called to replace the printbar.

EP-A-0310266 describes recalibration for LED array. A method of recalibrating an LED print head comprises providing a photodetector array for detecting the intensity of illumination of each LED, comparing the actual intensity with a desired value and adjusting the level of current applied to the LED array until the actual and desired values correspond, at which time a memory storing the current levels to be applied to the diode array is updated.

US-A-4588883 describes monolithic devices formed with an array of light emitting diodes and a detector. An array of light emitting diodes are fabricated in the substrate of a monolithic device. Each diode, when forward biased, produces output light which is emitted from the device and subsurface light which is transmitted through the substrate. A single detector is fabricated in the substrate and detects subsurface light from any forward biased light emitting diode of such array. In response to such subsurface light, the detector produces a signal which is representative of the intensity of output light emitted from the device by such forward biased light emitting diode.

### SUMMARY OF THE INVENTION:

It is the object of the present invention to improve a printbar used in a printing system particularly with regard to providing a simplified setup having improved cost efficiency. This object is achieved by providing a printbar according to claim 1 and a method of calibrating a printbar in a printer according to claim 5. Embodiments of the invention are set forth in the dependent claims.

### BRIEF DESCRIPTION OF THE DRAWINGS.

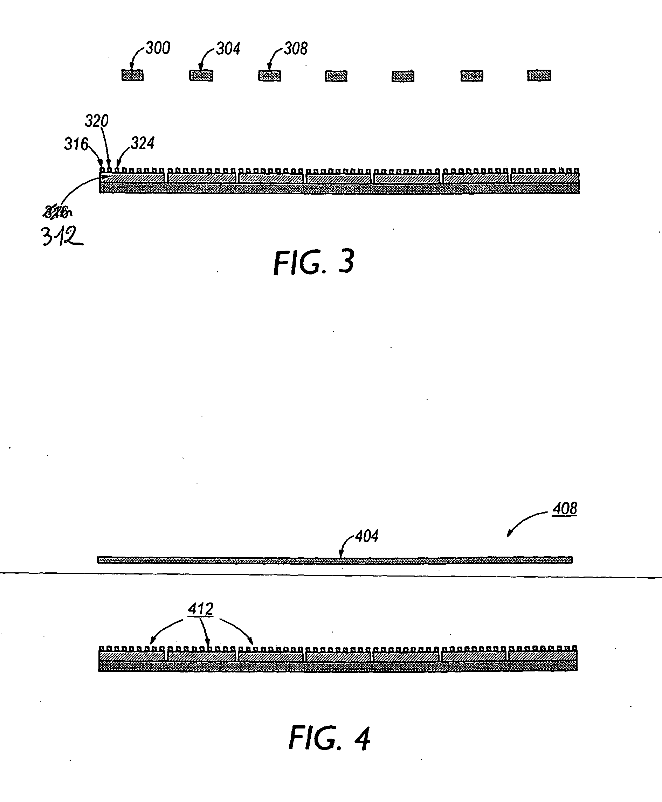

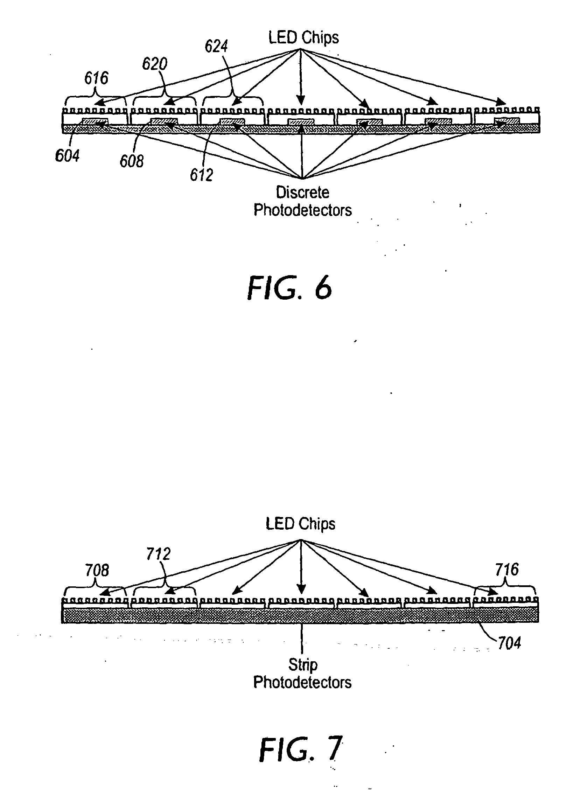

The examples shown in Figures 3 and 6 do not form part of the invention.
Figure 1 shows a printer system including a printbar, that provides a system to monitor the output of the printbar.
Figure 2 shows one embodiment of a cross section of a LED printbar including an illumination detection mechanism.
Figure 3 shows an arrangement where each photodetector corresponds to a LED chip including multiple LEDs,
Figure 4 shows an arrangement in accordance with the invention where a single strip photodetector is used in place of multiple discrete photodetectors.
Figure 5 shows an arrangement an arrangement where the photodetector is mounted on a circuit board upon which the LED is mounted.
Figure 6 shows the use of multiple photodetectors mounted as illustrated in Figure 5.
Figure 7 shows the use of a single strip photodetector in accordance with the invention mounted on a circuit board upon which the LED is mounted.
Figure 8 is a flow chart that describes that describes the method of detecting and adjusting power in a LED printbar.

### Detailed Description.

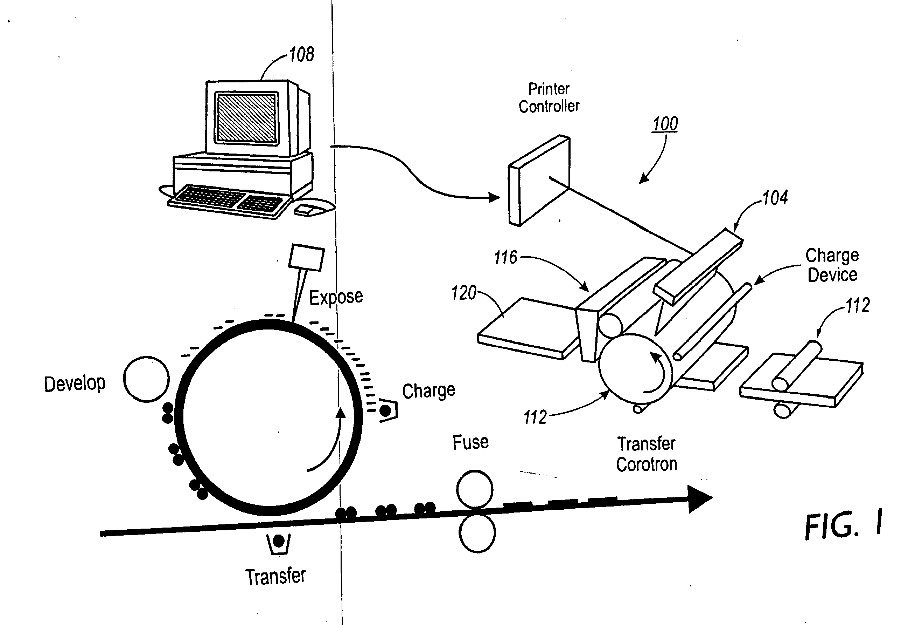

Figure 1 shows a printbar 104 as used in a printer system 100. The printbar receives a signal from a source of images, such as a computer 108. The printbar is moved over a photoreceptor plane 112 that receives the light output of the printbar and generates an electrical charge at each point that receives light from a LED. The output of the LEDs is adjusted to such that the light output of the printbar corresponds to a line of an image. As the printbar moves over the photoreceptor plane, a charge pattern is created on the photoreceptors that corresponds to the image to be printed.

After generation of a charge pattern on photoreceptor plane 112, a marking material source 116 deposits a marking material such as a toner over the photoreceptor plane 112. The marking material adheres to the charged areas of the photoreceptor plane. Heat from a heat source 116 melts the marking material causing adhesion of the marking material to substrate 120, such as paper, that receives the marking material.

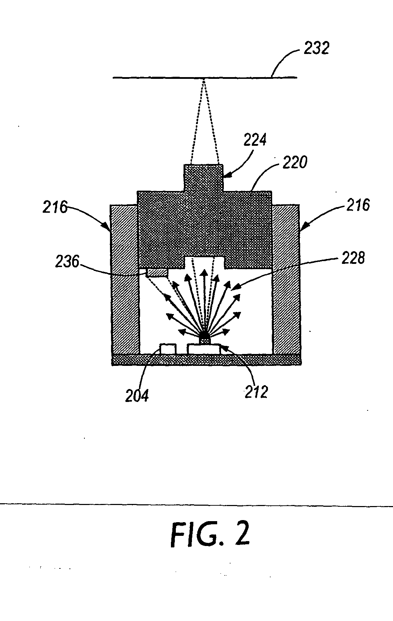

Figure 2 shows a cross section of one embodiment of printbar 104. A plurality of integrated circuit (IC) driver chips 204 mounted on a printed circuit board 208 controls the output of a plurality of LED chips 212. A printbar housing 216 and printbar cover 220 support a lens array 224. Lens array 224 is typically a Selfoc Lens array (SLA) that images the light output 228 of LED chips 212 onto photoreceptors in a photoreceptor plane 232. The photoreceptors develop a charge according to the intensity of the light received from LED chips 21. The charge is transferred to a substrate to be marked. The charge attracts marking material deposited on the substrate to be marked.

Besides switching each LED on and off, driver circuits also control the individual drive current to each LED element. When initially fabricated, the drive current to each LED is adjusted to correct for non-uniform light output from the different LEDs in the printbar. The non-uniform outputs typically result from slight differences in LED parameters that occur during the fabrication process. For example some LEDs may have slightly thicker active regions than other LEDs. Before correction, these non-uniformities typically result in a 20 to 30% variation in light intensity output among different LED chips at a given current input. Even when differences in process parameters are minimized by forming different LEDs on the same chip, the different LEDs within the same chip typically still have a 5 to 10% variation in light intensity at a given input current.

In printing applications, each LED typically corresponds to a pixel. The toner deposited per pixel is a function of the LED output corresponding to the pixel. Relatively minor variation of even 5 to 10% can result in a noticeable decline in print quality because the human eye is very sensitive to intensity differences over small distances.

To correct for these variations, each driver circuit is also adjusted to correct for the variations. During final assembly on the production line, the output of each LED is measured at the SLA image plane. The output of the driver circuit is then adjusted to bring the light intensity output by each LED to a certain predetermined value within the illumination uniformity specification (typically within 1% to 2.5% of a desired intensity value). Thus a calibration current, the amount of drive current used to achieve the correct illumination level, is measured and stored.

During fabrication of the LED printbar, the light that reaches a detector 236 when a corresponding LED receives a corresponding calibration current is measured and recorded. Detector 236 is typically a photodetector that outputs a current, the current being a function of the number of photons (light intensity) above a certain wavelength that reaches the photodetector. A detector match current output by detector 236 when the LED receives a calibration current that results in the detector outputting the desired intensity of light in the SLA image plane is stored in memory. The output of detector 236 will be used for adjustments to the LED in the field.

When printing an image, each LED may output different intensities that correspond to the different gray levels of a pixel being printed. The adjustment in intensity is achieved by scaling the driver circuit output current. The actual current received by the LED to print a pixel is thus a scaling of the calibrated current. For example, when a pixel darkness is 50% of the darkest printed pixel, a scaling factor of 50% is multiplied to the calibrated current corresponding to the LED. The scaling factor is the same for all LEDs, only the calibration current differs from pixel to pixel.

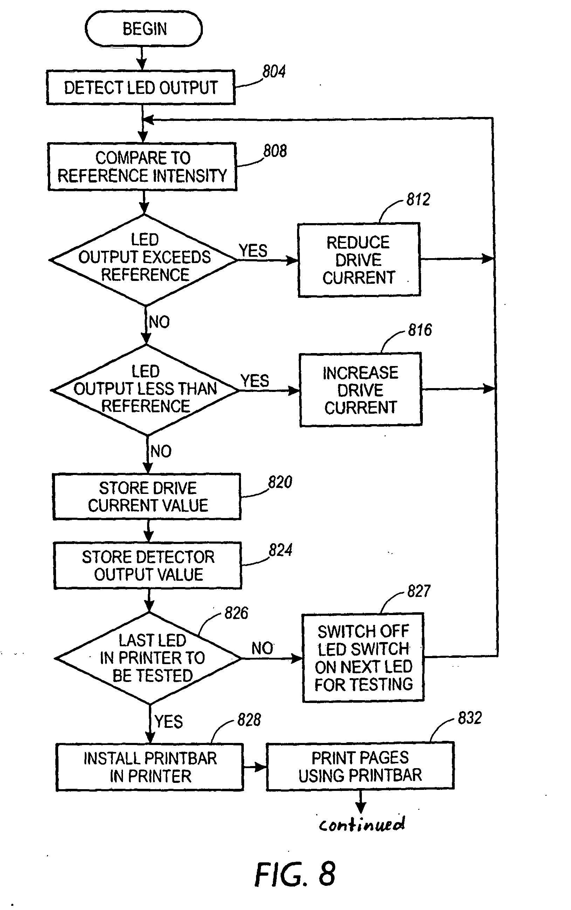

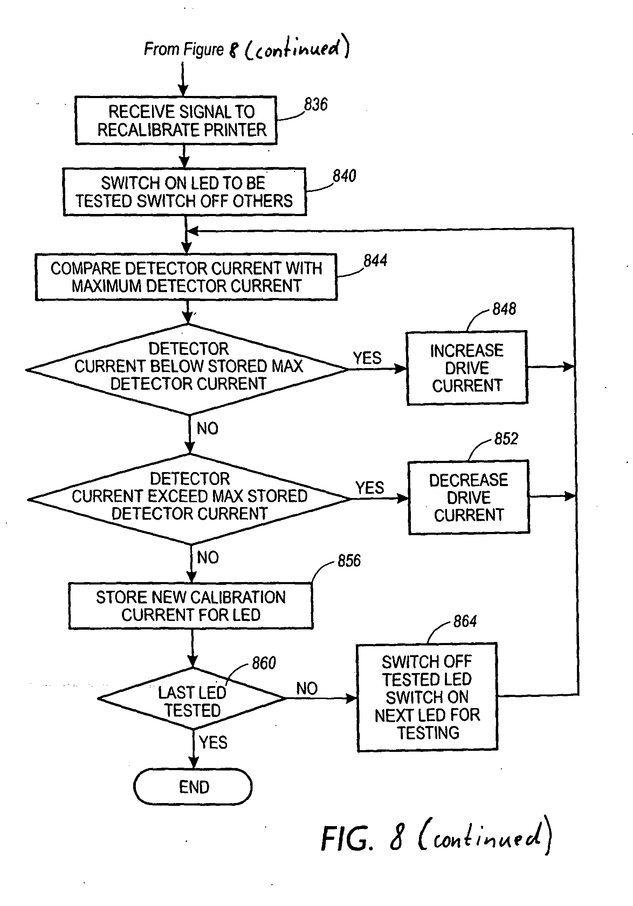

As the printbar undergoes thermal changes and ages, the LED output at a given driver current usually declines. The rate of decline of different LEDs in the printbar is not uniform. In traditional systems, when the differing rates of decline result in output intensity differences between adjacent LEDs exceeding acceptable specifications, the LED printbar is replaced even though the LEDs may still have a significant period of useful life. A LED printbar can range in price from $100 to $2,000, thus replacing a LED printbar with significant potential remaining life is a large waste of resources. The invention avoids such replacement by periodically recalibrating the printbar using the stored photodetector outputs. The recalibration process using the photodetector is described in the flow chart and description accompanying Figure 8.

Although Figure 2 shows in an example not forming part of the invention a single detector 236 corresponding to each LED, in order to save on fabrication costs, it is possible to implement the system of the present invention using fewer discrete photodetectors. Figure 3 shows in an example not forming part of the invention using a discrete photodetectors 300, 304, 308, each photodetector corresponding to a LED chip such as LED chip 312 which corresponds to photodetector 300. Each LED chip such as LED chip 312 includes a plurality of LEDs such as LED 316, 320, 324.

Alternate examples may be implemented that use one discrete photodetector for every two or more LED chips. However, reducing the number of discrete detectors increases the solid angle from which light will be received from associated LEDs because the LEDs will be spread over a wider area. The radiation pattern output by each LED may not be uniform in different directions, thus LEDs directly under the detector may provide more accurate reading relating to the decrease in output in the photoreceptor plane then LEDs located a significant distance off axis of the detector. Thus, when the number of photodetectors should be kept sufficient such that the detection of LED output occurs over a reasonable dynamic range.

One method of avoiding the problem of discrete photodetectors located significantly off axis from the LED being detected is to utilize a strip photodetector according to the invention as shown in Figure 4. In figure 4, a strip photodetector 404 runs along the printbar 408 parallel to the series of LEDs. The output of each LED can then be individually measured by keeping all LEDs off and switching only one LED on at a particular point in time. The output of strip photodetector 404 is then measured with the only one LED on.

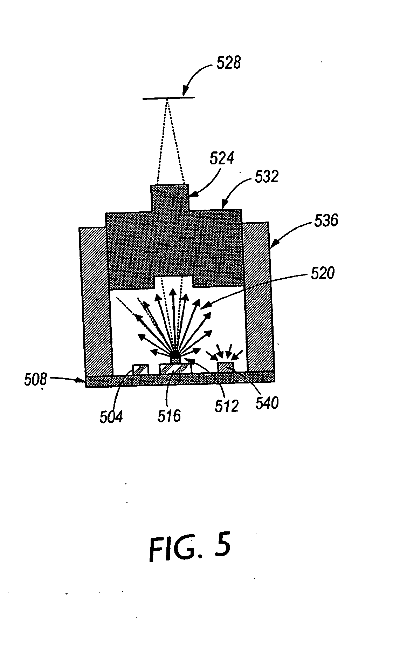

Although, Figure 2 shows photodetector 236 mounted directly to the cover of the printbar, alternate locations for the photodetector are also possible. The position on the cover is ideal for receiving light from the LED, however, fabrication may be simplified by mounting the detector on the circuit board as shown in Figure 5.

In Figure 5, a driver circuit 504 mounted on printed circuit board 508 provides power to a LED 512 on LED chip 516. Light 520 output from LED 512 is focused by a lens array 524 onto a photoreceptor plane 528. However, significant light is also reflected from printbar cover 532 as well as printbar housing 536. The reflected light is detected by a photodetector 540 mounted on printed circuit board 508.

Figure 6 shows in an example not forming part of the invention the use of a plurality of discrete photodetectors 604, 608, 612 mounted on a printed circuit board adjacent to LED chips 616, 620, 624. As in the case of the photodetectors mounted on the cover of the printbar, the number of photodetectors may be reduced such that a single discrete photodetector can correspond to several LED chips. Alternately, as shown in Figure 7, according to the invention a single strip photodetector 704 running parallel to a series of LED chips 708, 712, 716 is used to detect the output of the LED chips.

Figure 8 is a flow chart describing the procedures used to readjust the calibration current after the printbar has been in use for a period of time. Blocks of the flowchart correspond to the initial set up of the system usually done during assembly of the printbar. Blocks of the flowchart correspond to recalibration of the printbar after a period of printing.

In block 804, the light output from a LED is detected at a photoreceptor plane. The light from the LED is compared to a desired reference light intensity in block 808. The reference light intensity is the same for all LEDs on the printbar. If the light output by the LED exceeds the reference light intensity, the current provided by the driver circuit is reduced in block 812. If the light output by the LED is less then the reference light intensity, the current provided by the driver circuit is increased in block 816. When the light output by the LED is within a specified tolerance of the reference light intensity at the photoreceptor, the calibration current provided by the driver circuit is stored in a memory location in block 820 for future reference. The driver current stored in the memory location is the maximum current provided by the driver circuit to the LED. In block 824, the output of a photodetector, typically a detector match current, is also recorded. The detector match current is the output of the photodetector when the LED outputs the reference light intensity at the photoreceptor plane.

In block 828, the printbar is installed inside the printer. The printbar is subject to normal use in block 832. Such normal use may include, but is not limited to receiving a signal from an imaging source such as a computer and causing the printbar to illuminate a media such that a charge distribution on the media matches the image from the imaging source. The charge distribution distributes a marking material over the substrate such that the marking material distribution matches the image from the imaging source.

In block 836, a signal is transmitted to recalibrate the printbar. Such a signal may be generated upon each power up of the printbar, or more typically, the signal may be generated after an extended period of printing. When a signal to recalibrate the printbar is received, only one LED is switched on and all remaining LEDs are switched off in block 840.

In block 844, a comparison circuit compares the output of photodetector with the detector match current stored in memory in block 844. Typically, an ideal starting current is the calibration current for the LED, typically this calibration current was determined during printbar assembly or the last recalibration of the printbar. When the output of the photodetector is below the stored maximum detector current for the LED being tested, the drive circuit increases the current to the LED in block 848 to increase the LED output. When the comparison circuit determines that the output of the photodetector exceeds the detector match current stored in memory, the driver circuit decreases the drive current to the LED in block 852. When the comparison circuit determines that the output of the photodetector matches the stored detector match current value within a specified tolerance, the drive current used becomes the new calibration current for the LED. In block 856, the new calibration current value replaces the calibration current value stored in memory.

In block 860, it is determined if this is the last LED to be tested in the printbar. When it is not the last LED to be tested, the tested LED is turned off, and the next LED to be tested in the printbar is turned on in box 864. The procedure beginning with box 844 is then repeated with a corresponding photodetector for the next LED to be tested. The procedure continues until every LED in the printbar has been tested. In the event that the LEDs have reached a point that regardless of drive current, the LED cannot output signal sufficient to cause the photodetector to output sufficient current, a warning may be provided to the user that the printbar should be replaced.
In order to facilitate understanding of the invention, a number of details have been provided. For example, various positioning of the intensity detectors, and even example materials that may be used to fabricate the intensity detectors have been recited. These details are provided to facilitate an understanding of the invention and to provide example embodiments, but are not intended to limit the scope of the invention which should only be limited by the claims as given below.

## Claims

1. A printbar (104) comprising:
a printbar housing (216) having internal walls;
a plurality of light emitting diodes (316, 320, 324) to provide light to an imaging device;
a photodetector to detect the power output of each light emitting diode in the plurality of light emitting diodes; and,
an adjustable power supply configured to allow individual adjustment of power provided to each light emitting diode in the plurality of light emitting diodes, the power provided to the light emitting diode adjusted based on the feedback from the photodetector,
**characterized in that**
the photodetector is a strip photodetctor (404) that runs along the printbar (104) parallel to the plurality of light emitting diodes, and
the strip photodetctor (404) being arranged in the printbar housing (216) such that light from each light emitting diode directly impinges the strip detector or such that light from each light emitting diode impinges the strip detector after being scattered at the internal walls of the printbar housing (216).

2. The printbar of claim 1 wherein the photodetector is multiplexed in time to determine the output of a first light emitting diode (316) in the plurality of light emitting diodes at a first time and to determine the output of a second light emitting diode (320) in the plurality of light emitting diodes at a second time.

3. The printbar of claim 1 wherein the adjustable power supply changes the amount of current provided to the light emitting diodes .

4. The printbar of claim 1 further comprising:
a storage device to store a calibration current for each light emitting diode, the calibration current being the current to be provided to the light emitting diode to cause the light emitting diode to output a predetermined intensity of light at a photoreceptor plane (232).

5. A method of calibrating a printbar (104) in a printer comprising the operations of:
utilizing a printbar (104) to output an image;
providing in the printbar a plurality of light emitting diodes (316, 320, 324) to provide light to an imaging device;
determining when the printbar (104) needs to be recalibrated;
detecting at a photodetector integrated into said printbar (104), the output of a light emitting diode in the plurality of light emitting diodes and adjusting a current provided to the light emitting diode until the intensity of light detected by the photodetector matches a reference intensity determined during assembly of the printbar,
**characterized in that**
the photodetector is a strip photodetctor (404) that runs along the printbar (104) parallel to the plurality of light emitting diodes, and the strip photodetctor (404) being arranged in the printbar housing (216) such that light from each light emitting diode directly impinges the strip detector or such that light from each light emitting diode impinges the strip detector after being scattered at the internal walls of the printbar housing (216).

6. The method of claim 5 further comprising the operation of:
replacing a reference current value stored in memory with a revised reference current value, the revised reference current value indicating the new current provided to the light emitting diode that causes the intensity of light detected by the photodetector to match the reference intensity determined during assembly of the printbar.

## Patentansprüche

1. Druckbalken (104), umfassend:
ein Druckbalkengehäuse (216) mit Innenwänden;
eine Mehrzahl von Licht emittierenden Dioden (316, 320, 324) zur Bereitstellung von Licht für eine Abbildungsvorrichtung;
einen Fotodetektor zum Erfassen der von jeder Licht emittierenden Diode in der Mehrzahl von Licht emittierenden Dioden ausgegebenen Leistung; und
eine anpassbare Leistungsversorgung, die dafür ausgestaltet ist, eine Einzelanpassung von Leistung, die für jede Licht emittierende Diode in der Mehrzahl von Licht emittierenden Dioden bereitgestellt wird, zu ermöglichen, wobei die für die Licht emittierende Diode bereitgestellte Leistung auf Grundlage einer Rückkopplung bzw. Rückmeldung von dem Fotodetektor angepasst wird,
**dadurch gekennzeichnet, dass**
der Fotodetektor ein Streifenfotodetektor (404) ist, der entlang des Druckbalkens (104) parallel zu der Mehrzahl von Licht emittierenden Dioden verläuft, und
der Streifenfotodetektor (404) in dem Druckbalkengehäuse (216) derart, dass Licht aus jeder Licht emittierenden Diode direkt auf den Streifendetektor auftrifft, oder derart,
dass Licht aus jeder Licht emittierenden Diode auf den Streifendetektor nach einer Streuung an den Innenwänden des Druckbalkengehäuses (216) auftrifft, angeordnet ist.

2. Druckbalken nach Anspruch 1, wobei der Fotodetektor in der Zeit gemultiplext wird, um die Ausgabe einer ersten Licht emittierenden Diode (316) in der Mehrzahl von Licht emittierenden Dioden zu einer ersten Zeit zu bestimmen und die Ausgabe einer zweiten Licht emittierenden Diode (320) in der Mehrzahl von Licht emittierenden Dioden zu einer zweiten Zeit zu bestimmen.

3. Druckbalken nach Anspruch 1, wobei die anpassbare Leistungsversorgung die Menge von für die Licht emittierenden Dioden bereitgestelltem Strom ändert.

4. Druckbalken nach Anspruch 1, des Weiteren umfassend:
eine Speichervorrichtung zum Speichern eines Kalibrierungsstromes für jede Licht emittierende Diode, wobei der Kalibrierungsstrom derjenige Strom ist, der für die Licht emittierende Diode bereitgestellt wird, um zu bewirken, dass die Licht emittierende Diode eine vorbestimmte Lichtstärke an einer Fotorezeptorebene (232) ausgibt.

5. Verfahren zur Kalibrierung eines Druckbalkens (104) in einem Drucker, umfassend die nachfolgenden Vorgänge:
Einsetzen eines Druckbalkens (104) zum Ausgeben eines Bildes;
in dem Druckbalken erfolgendes Bereitstellen einer Mehrzahl von Licht emittierenden Dioden (316, 320, 324) zur Bereitstellung von Licht für eine Abbildungsvorrichtung;
Bestimmen, wann der Druckbalken (104) einer Neukalibrierung bedarf;
an einem Fotodetektor, der in den Druckbalken (104) integriert ist, erfolgendes Erfassen der Ausgabe einer Licht emittierenden Diode in der Mehrzahl von Licht emittierenden Dioden und Anpassen eines für die Licht emittierende Diode bereitgestellten Stromes, bis die von dem Fotodetektor erfasste Lichtstärke zu einer während des Zusammensetzens des Druckbalkens bestimmten Referenzstärke passt,
**dadurch gekennzeichnet, dass**
der Fotodetektor ein Streifenfotodetektor (404) ist, der entlang des Druckbalkens (104) parallel zu der Mehrzahl von Licht emittierenden Dioden verläuft, und
der Streifenfotodetektor (404) in dem Druckbalkengehäuse (216) derart, dass Licht aus jeder Licht emittierenden Diode direkt auf den Streifendetektor auftrifft, oder derart, dass Licht aus jeder Licht emittierenden Diode auf den Streifendetektor nach einer Streuung an den Innenwänden des Druckbalkengehäuses (216) auftrifft, angeordnet ist.

6. Verfahren nach Anspruch 5, des Weiteren umfassend den nachfolgenden Vorgang:
Ersetzen eines in einem Speicher gespeicherten Referenzstromwertes durch einen revidierten Referenzstromwert, wobei der revidierte Referenzstromwert den für die Licht emittierende Diode bereitgestellten neuen Strom angibt, der bewirkt, dass die von dem Fotodetektor erfasste Lichtstärke zu der während des Zusammensetzens des Druckbalkens bestimmten Referenzstärke passt.

## Revendications

1. Barre d'impression (104), comprenant :
un boîtier (216) de barre d'impression ayant des parois internes ;
une pluralité de diodes électroluminescentes (316, 320, 324) destinées à fournir de la lumière à un dispositif d'imagerie ;
un photodétecteur destiné à détecter la sortie de puissance de chaque diode électroluminescente dans la pluralité de diodes électroluminescentes ; et,
un bloc d'alimentation réglable configuré pour permettre un réglage individuel de la puissance fournie à chaque diode électroluminescente dans la pluralité de diodes électroluminescentes, la puissance fournie à la diode électroluminescente étant réglée sur la base de la rétroaction provenant du photodétecteur,
**caractérisée en ce que**
le photodétecteur est un photodétecteur à bande (404) qui s'étend le long de la barre d'impression (104) de manière parallèle à la pluralité de diodes électroluminescentes, et
le photodétecteur à bande (404) étant agencé dans le boîtier (216) de barre d'impression de sorte que la lumière provenant de chaque diode électroluminescente arrive directement sur le détecteur à bande ou de sorte que la lumière provenant de chaque diode électroluminescente arrive sur le détecteur à bande après avoir été diffusée au niveau des parois internes du boîtier (216) de barre d'impression.

2. Barre d'impression de la revendication 1, dans laquelle le photodétecteur est multiplexé dans le temps pour déterminer la sortie d'une première diode électroluminescente (316) dans la pluralité de diodes électroluminescentes à un premier instant et pour déterminer la sortie d'une deuxième diode électroluminescente (320) dans la pluralité de diodes électroluminescentes à un deuxième instant.

3. Barre d'impression de la revendication 1, dans laquelle le bloc d'alimentation réglable change la quantité de courant fourni aux diodes électroluminescentes.

4. Barre d'impression de la revendication 1, comprenant en outre :
un dispositif de stockage destiné à stocker un courant d'étalonnage pour chaque diode électroluminescente, le courant d'étalonnage étant le courant à fournir à la diode électroluminescente pour amener la diode électroluminescente à délivrer en sortie une intensité prédéterminée de la lumière au niveau d'un plan photorécepteur (232).

5. Procédé d'étalonnage d'une barre d'impression (104) dans une imprimante, comprenant les opérations qui consistent :
à utiliser une barre d'impression (104) pour délivrer en sortie une image ;
à fournir dans la barre d'impression une pluralité de diodes électroluminescentes (316, 320, 324) pour fournir de la lumière à un dispositif d'imagerie ;
à déterminer le moment où la barre d'impression (104) doit être étalonnée à nouveau ;
à détecter, au niveau d'un photodétecteur intégré dans ladite barre d'impression (104), la sortie d'une diode électroluminescente dans la pluralité de diodes électroluminescentes et à régler un courant fourni à la diode électroluminescente jusqu'à ce que l'intensité de la lumière détectée par le photodétecteur corresponde à une intensité de référence déterminée pendant l'assemblage de la barre d'impression,
**caractérisé en ce que**
le photodétecteur est un photodétecteur à bande (404) qui s'étend le long de la barre d'impression (104) de manière parallèle à la pluralité de diodes électroluminescentes, et
le photodétecteur à bande (404) étant agencé dans le boîtier (216) de barre d'impression de sorte que la lumière provenant de chaque diode électroluminescente arrive directement sur le détecteur à bande ou de sorte que la lumière provenant de chaque diode électroluminescente arrive sur le détecteur à bande après avoir été diffusée au niveau des parois internes du boîtier (216) de barre d'impression.

6. Procédé de la revendication 5, comprenant en outre l'opération qui consisté :
à remplacer une valeur de courant de référence stockée dans la mémoire par une valeur de courant de référence révisée, la valeur de courant de référence révisée indiquant le nouveau courant fourni à la diode électroluminescente qui amène l'intensité de la lumière détectée par le photodétecteur à correspondre à l'intensité de référence déterminée pendant l'assemblage de la barre d'impression.
